# EUROPÄISCHE PATENTSCHRIFT

(11) **EP 2 268 517 B1**
(45) Veröffentlichungstag und Bekanntmachung des Hinweises auf die Patenterteilung: **13.07.2011**
(21) Anmeldenummer: 09730889.4
(22) Anmeldetag: 10.02.2009
(51) Int. Cl.: B60T 11/18, B60T 13/14, B60T 13/68

(54) **BETÄTIGUNGSEINHEIT FÜR EINEN HAUPTBREMSZYLINDER EINER HYDRAULISCHEN FAHRZEUGBREMSANLAGE**
ACTUATING UNIT FOR A MASTER BRAKE CYLINDER OF A HYDRAULIC VEHICLE BRAKE SYSTEM
UNITÉ D'ACTIONNEMENT POUR MAÎTRE-CYLINDRE DE FREIN DE SYSTÈME DE FREINAGE HYDRAULIQUE POUR VÉHICULE AUTOMOBILE

(30) Priorität: 08.04.2008 DE 102008001061
(43) Veröffentlichungstag der Anmeldung: 05.01.2011
(73) Patentinhaber: Robert Bosch GmbH, 70442 Stuttgart (DE)
(72) Erfinder: MAYER, Jochen, 70195 Stuttgart-Botnang (DE)
(86) Internationale Anmeldenummer: PCT/EP2009/051473
(87) Internationale Veröffentlichungsnummer: WO 2009/124795

(56) Entgegenhaltungen:
- EP-A- 1 078 833
- WO-A-01/72567
- DE-A1- 10 055 715
- DE-A1- 10 346 674
- DE-A1-102005 030 223
- US-A- 4 404 803

## Beschreibung

### Stand der Technik

Die Erfindung betrifft eine Betätigungseinheit für einen Hauptbremszylinder einer hydraulischen Fahrzeugbremsanlage mit den Merkmalen des Oberbegriffs des Anspruchs 1. Die Betätigungseinheit dient der Übertragung der Muskelkraft von einem Betätigungselement, normalerweise also einem Fußbremspedal oder einem Handbremshebel, auf einen Kolben eines Hauptbremszylinders. Die Betätigungseinheit tritt sozusagen an die Stelle einer Kolbenstange, die bei bislang üblichen Fahrzeugbremsanlagen das Fußbremspedal mit dem Kolben des Hauptbremszylinders verbindet. Allerdings ermöglicht die Betätigungseinrichtung eine teilweise oder vollständige Entkoppelung des Fußbremspedals oder allgemein des Betätigungselements vom Kolben des Hauptbremszylinders und sie ermöglicht die Einkoppelung von Fremdenergie, nämlich hydraulischem Druck, zu einer hydraulischen Bremskraftverstärkung oder zu einer Fremdkraftbremsung. Die Bremskraftverstärkung wird als Hilfskraftbremsung bezeichnet, bei der ein Teil einer Betätigungskraft zur Betätigung des Hauptbremszylinders durch Muskelkraft vom Fahrzeugführer aufgebracht und ein anderer Teil der Betätigungskraft durch Fremdenergie erzeugt wird.

Eine derartige Betätigungseinheit ist aus der Patenanmeldung DE 10 2004 025 638 A1 bekannt. Die bekannte Betätigungseinheit weist einen ersten Kolben auf, der über eine Kolbenstange mechanisch mit einem Fußbremspedal verbunden ist. Der erste Kolben ist verschiebbar in einer Zylinderbohrung eines zweiten Kolbens aufgenommen, gegen den er sich mit einer Druckfeder abstützt. Ein dritter Kolben ist gleichachsig zum zweiten Kolben in einer gemeinsamen Zylinderbohrung aufgenommen, wobei die beiden Kolben aneinander anliegen, wenn die Betätigungseinheit nicht betätigt ist. Die beiden Kolben sind in der Zylinderbohrung eines Hauptbremszylinders aufgenommen, der dritte Kolben bildet einen Primärkolben des Hauptbremszylinders, der an die Stelle eines Stangenkolbens eines herkömmlichen Hauptbremszylinders tritt. Denkbar ist allerdings auch, die beiden Kolben in einem Zylinder außerhalb des Hauptbremszylinders unterzubringen und die Kraft des dritten Kolbens mechanisch beispielsweise über eine Druckstange auf den Primärkolben des Hauptbremszylinders zu übertragen.

Eine Betriebsbremsung erfolgt als Fremdkraftbremsung durch hydraulische Druckbeaufschlagung eines Zwischenraums zwischen dem zweiten und dem dritten Kolben der bekannten Betätigungseinheit. Der hydraulische Druck stammt von einer Hydropumpe, an die vorzugsweise ein Hydrospeicher angeschlossen ist. Die Hydropumpe mit dem angeschlossenen Hydrospeicher bilden eine Fremdenergieversorgungseinrichtung. Der hydraulische Druck hält den zweiten Kolben der Betätigungseinheit in seiner Grundstellung, der sich während einer Betriebsbremsung nicht verschiebt. Der hydraulische Druck verschiebt den dritten Kolben der Betätigungseinheit, der den Primärkolben des Hauptbremszylinders bildet. Die Verschiebung des dritten Kolbens verdrängt wie üblich Bremsflüssigkeit aus dem Hauptbremszylinders zur Betätigung der Fahrzeugbremsanlage.

Als Sollwert für die Höhe des Bremsdrucks wird eine Bewegung des Fußbremspedals oder auch die Muskelkraft, mit der das Fußbremspedal niedergetreten wird, herangezogen. Mit dem Fußbremspedal wird über die Druckstange der erste Kolben gegen die Kraft der Druckfeder verschoben, mit der sich der erste Kolben am zweiten Kolben abstützt. Der zweite Kolben wird wie bereits gesagt durch den hydraulischen Druck der Fremdenergieversorgungseinrichtung in seiner Grundstellung rückgehalten. Der zweite Kolben mit der Zylinderbohrung für den ersten Kolben und der erste Kolben, der gegen die Druckfeder verschiebbar ist, bilden einen Pedalwegsimulator, der bei einer Fremdkraftbremsung dem Fahrzeugführer ein Pedatgefühl vermittelt, das demjenigen Pedalgefühl hydraulischer Fahrzeugbremsanlagen ähnlich ist.

Bei Ausfall der Fremdenergieversorgung wird bei Betätigung des Fußbremspedals der erste Kolben verschoben. Da der Gegendruck fehlt, verschiebt der erste Kolben über die Druckfeder den zweiten Kolben, der eine Schnüffelbohrung überfährt Dadurch wird ein Bremsflüssigkeitsvolumen in der Zylinderbohrung des zweiten Kolbens eingeschlossen, so dass sich der erste Kolben nicht mehr im zweiten Kolben verschieben lässt, sondern der zweite Kolben verschiebt sich mit dem ersten Kolben. Die Bewegung wird vom zweiten Kolben auf den dritten, an ihm anliegenden Kolben übertragen und es erfolgt eine Hilfsbremsung durch Muskelkraft.

Die Offenlegungsschrift DE 103 46 674 A1 offenbart eine Betätigungseinheit für einen Hauptbremszylinder mit zwei ineinander angeordneten Kolben, deren erster über eine Pedalstange mit einem Bremspedal verbunden ist. Der erste Kolben ist im zweiten Kolben verschiebbar und stützt sich über elastische Elemente am zweiten Kolben ab, wodurch ein Pedalwegsimulator gebildet ist. Ein koaxial angeordneter dritter Kolben bildet einen Kolben eines Hauptbremszylinders, er ist zur Betätigung des Hauptbremszylinders durch Druckbeaufschlagung eines Zwischenraums zwischen dem zweiten und dem dritten Kolben verschiebbar. Eine Betriebsbremsung erfolgt als Fremdkraftbremsung durch Druckbeaufschlagung des Zwischenraums, die nicht nur den dritten Kolben verschiebt, sondern auch den zweiten Kolben in seiner Ausgangsstellung hält Bei Ausfall der Fremdenergie wird der dritte Kolben durch mechanische Kraftübertragung durch Anlage des dritten am zweiten Kolben verschoben.

Eine vergleichbare Betätigungseinheit offenbart die Offenlegungsschrift EP 1 078 833 A.

Die internationale Patentanmeldung WO 01/72 567 A1 offenbart eine Betätigungseinheit für einen Hauptbremszylinder mit zwei parallel nebeneinander und exzentrisch angeordneten Hauptbremszylinderkolben, die zu einer Fremdkraftbremsung mit hydraulischem Druck beaufschlagbar sind. Zu einer Hilfsbremsung bei Ausfall der Fremdenergie erfolgt eine mechanische Verschiebung der beiden Hauptbremszylinder mittels eines Stößels eines zweiten Kolbens, der gegen eine die beiden Hauptbremszylinderkolben verbindende Wippe drückt. Bei einer Fremdkraftbremsung hält hydraulischer Druck den zweiten Kolben in seiner Ausgangsstellung. Im zweiten Kolben ist ein erster Kolben verschiebbar aufgenommen, der sich über elastische Elemente am zweiten Kolben abstütz so dass ein Pedahnregsimulator gebildet ist Eine Pedalstange verbindet ein Bremspedal mit dem ersten Kolben.

### Offenbarung der Erfindung

Die erfindungsgemäße Betätigungseinheit mit den Merkmalen des Anspruchs 1 weist ein Übertragungselement auf, das mit einem Betätigungselement der Fahrzeugbremsanlage verbunden ist. Das Betätigungselement ist insbesondere ein Fußbremspedals oder ein Handbremshebel. Des weiteren weist die efindungsgemäße Betätigungseinheit einen druckbeaufschlagbaren Verstärkerkolben auf, der ein Ausgangsetement der Betätigungseinheit bildet. Der Verstärkerkolben betätigt den Hauptbremszylinder, er kann ein Kolben des Hauptbremszylinders sein oder er ist über beispielsweise eine Kolbenstange mit einem Kolben des Hauptbremszylinders verbunden. Eine andere Möglichkeit ist, dass der EP 10 788 233 A.

Verstärkerkolben der Betätigungseinheit hydraulisch mit dem Kolben des Hauptbremszylinders kommuniziert. Des weiteren weist die erfindungsgemäße Betätigungseinheit eine Kolben-Zylinder-Einheit auf, die einen hydraulischen Übertrager bildet, mit dem eine Kraft vom Übertragungselement auf den Verstärkerkolben übertragbar ist. Es weisen das Übertragungselement einen Kolben und der Verstärkerkolben einen Zylinder der Kolben-Zylinder-Einheit auf, oder umgekehrt weist der Verstärkerkolben einen Kolben und das Übertragungselement einen Zylinder der Kolben-Zylinder-Einheit auf. Es können das Übertragungselement bzw. der Verstärkerkolben als Kolben bzw. Zylinder ausgebildet oder das Übertragungselement und/oder der Verstärkerkolben beispielsweise über Druckstangen mit dem Kolben bzw. dem Zylinder der Kolben-Zylinder-Einheit verbunden sein. Auch können das Übertragungselement und der Verstärkerkolben jeweils Kolben der Kolben-Zylinder-Einheit des hydraulischen Übertragers aufweisen, die in einem (feststehenden) Zylinder verschiebbar sind.

Zu einer Fremdenergiebremsung wird der Verstärkerkolben der erfindungsgemäßen Betätigungseinheit hydraulisch mit Druck aus einer Fremdenergieversorgungseinrichtung beaufschlagt und betätigt den Hauptbremszylinder. Die Kolben-Zylinder-Einheit, die den hydraulischen Übertrager der erfindungsgemäßen Betätigungseinheit bildet, ist zu einer Fremdkraftbremsung offen, so dass in ihr enthaltene Bremsflüssigkeit austreten kann. Anstelle von Bremsflüssigkeit kann auch eine andere Hydraulikflüssigkeit enthalten sein, was nachfolgend nicht mehr erwähnt werden wird. Die offene Kolben-Zylinder-Einheit ermöglicht eine Relativbewegung des Übertragungselement gegenüber dem Verstärkerkolben, die beiden Elemente sind voneinander entkoppelt. Der Bremsdruck wird durch die hydraulische Druckbeaufschlagung des Verstärkerkolbens erzeugt. Das Übertragungselement oder das es verschiebende Betätigungselement, also beispielsweise ein Fußbremspedal, dienen als Sollwertgeber für die einzustellende Höhe des Bremsdrucks. Insbesondere arbeitet das Übertragungselement gegen ein Federelement, um eine Kraft am Bedienelement zu bewirken, so dass die erfindungsgemäße Betätigungseinheit einen integrierten Pedalwegsimulator aufweist.

Zu einer Hilfskraftbremsung wird die Kolben-Zylinder-Einheit, die den hydraulischen Übertrager bildet, geschlossen, d.h. das in ihr eingeschlossene Bremsflüssigkeitsvolumen bleibt konstant. Das Übertragungselement ist dadurch mit dem Verstärkerkolben verbunden, beide bewegen sich gemeinsam und eine auf das Übertragungselement ausgeübte Muskelkraft wird über den hydraulischen Übertrager auf den Verstärkerkolben übertragen. Zusätzlich wird der Verstärkerkolben hydraulisch von der Fremdenergieversorgung mit Druck beaufschlagt. Die auf den Kolben des Hauptbremszylinders ausgeübte Betätigungskraft ist die Summe der auf das Übertragungselement ausgeübten Muskelkraft und der durch die Druckbeaufschlagung des Verstärkerkolbens erzeugten Kraft. Die vom Fahrzeugführer ausgeübte Muskelkraft wird durch hydraulische Fremdenergie verstärkt. Eine Relativbewegung zwischen dem Übertragungselement und dem Verstärkerkolben ist durch gesteuertes oder geregeltes Auslassen oder auch Zuführen von Flüssigkeit in die Kolben-Zylinder-Einheit möglich, die den hydraulischen Übertrager bildet. Dadurch kann ein vom Weg des Verstärkerkolbens verschiedener Weg des Übertragungselements und damit ein vom Weg des Verstärkerkolbens verschiedener Betätigungsweg eines Fußbremspedals oder Handbremshebels bewirkt werden.

Eine Hilfsbremsung bei Ausfall der Fremdenergie erfolgt durch Sperren der Kolben-Zylinder-Einheit, so dass das in ihr eingeschlossene Flüssigkeitsvolumen konstant bleibt. Der Verstärkerkolben bewegt sich gemeinsam mit dem Übertragungselement, eine auf das Übertragungselement ausgeübte Muskelkraft wird auf den Verstärkerkolben übertragen, der Hauptbremszylinder wird durch Muskelkraft betätigt.

Die Erfindung hat den Vorteil, dass sie eine Fremdkraft- oder eine Hilfskraftbremsung ermöglicht und dass bei Ausfall einer Fremdenergieversorgung eine Muskelkraftbremsung möglich ist. Ein zusätzlicher Vorteil der Erfindung ist, dass bei einer Hilfsbremsung bei Ausfall der Fremdenergieversorgung kein Relativeg zwischen dem Übertragungselement und dem Verstärkerkolben stattfindet, es geht also kein Betätigungsweg verloren. Außerdem ist ein Pedalwegsimulator integriert oder jedenfalls ohne weiteres integrierbar.

Bei der Verwendung der erfindungsgemäßen Betätigungseinheit in einem Hybridfahrzeug lässt sich das Fahrzeug teilweise oder vollständig mit dem oder den Elektromotoren bremsen, die dazu als Generatoren betrieben werden. Mit der erfindungsgemäßen Betätigungseinheit wird ein Sollwert für die Bremskraft ermittelt. Der Weg und die Kraft des Übertragungselements, also die vom Fahrzeugführer auf ein Fußbremspedal ausgeübte Muskelkraft sowie der Pedalweg sind mit der erfindungsgemäßen Betätigungseinheit unabhängig von der Bremskraft einstellbar. Die erfindungsgemäße Betätigungseinheit ermöglicht das gewohnte Pedalgefühl unabhängig davon, ob die Verzögerung des Fahrzeugs vollständig, teilweise oder nicht mit der Fahrzeug-Reibungsbremsanlage über die erfindungsgemäße Betätigungseinheit erfolgt. Außerdem lässt sich eine beliebige Pedalcharakteristik, also eine beliebige Abhängigkeit des Pedalwegs von der Pedalkraft einstellen. Ein weiterer Vorteils ist die Möglichkeit einer Bremsbetätigung ohne Bewegung des Übertragungselements, also ohne Pedalbewegung.

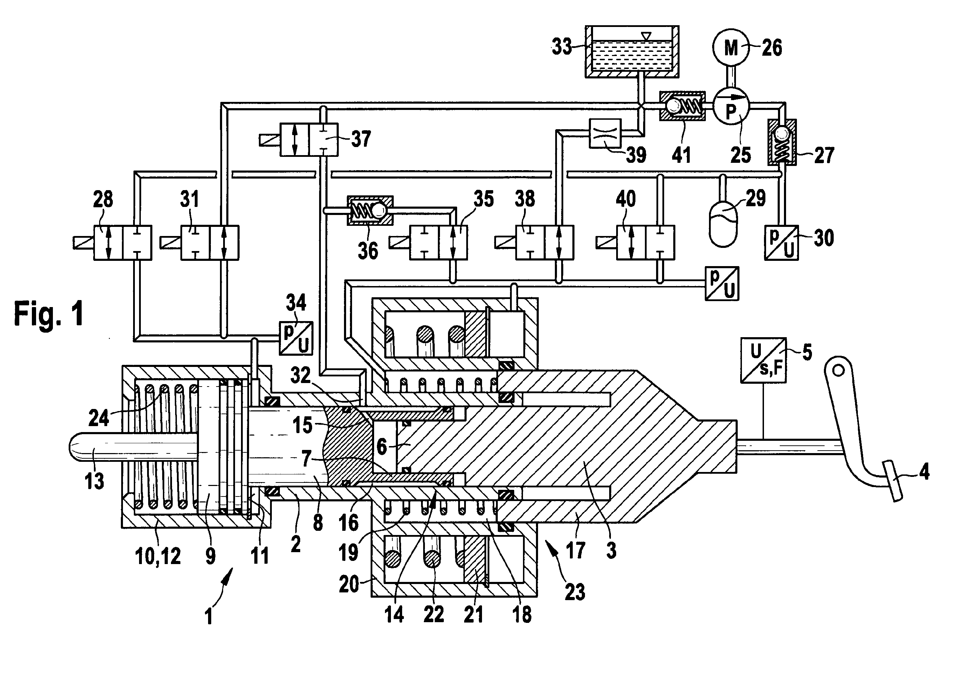

Die Unteransprüche haben vorteilhafte Ausgestaltungen und Weiterbildungen der im Anspruch 1 angegebenen Erfindung zum Gegenstand. Weitere Merkmale der Erfindung ergeben sich aus der folgenden Beschreibung einer Ausführungsform der Erfindung in Verbindung mit den Ansprüchen und der Zeichnung. Die einzelnen Merkmale können je für sich oder zu mehreren in beliebiger Kombination bei Ausführungsformen der Erfindung verwirklicht sein.

### Kurze Beschreibung der Zeichnung

Die Erfindung wird nachfolgend anhand eines in der Zeichnung dargestellten Ausführungsbeispiels näher erläutert. Die einzige Figur zeigt einen Achsschnitt einer erfindungsgemäßen Betätigungseinheit mit hydraulischer Beschaltung. Die Zeichnung ist als vereinfachte und schematisierte Darstellung zur Erläuterung und zum Verständnis der Erfindung zu verstehen.

### Ausführungsform der Erfindung

Die in der Zeichnung dargestellte, erfindungsgemäße Betätigungseinheit 1 ist zur Betätigung eines nicht dargestellten Hauptbremszylinders einer hydraulischen Fahrzeugbremsanlage vorgesehen, und zwar insbesondere, allerdings nicht zwingend, für ein sog. Hybridfahrzeug. Ein Hybridfahrzeug ist ein Kraftfahrzeug mit einem Verbrennungsmotor und einem (oder mehreren) Elektromotor(en) zum kombinierten Antrieb des Fahrzeugs. Bei einer Fahrzeugverzögerung, also einer Bremsung, wird Energie rückgewonnen indem der Elektromotor bzw. die Elektromotoren als Generator betrieben wird. Die Verzögerung des Hybridfahrzeugs erfolgt vollständig, teilweise oder nicht mit dem oder den Elektromotor(en) und folglich nicht, teilweise oder vollständig mit der Fahrzeug-Reibungsbremsanlage. Dabei kann sich das Verhältnis, zu dem der als Generator betriebene Elektromotor und die Fahrzeug-Reibungsbremsanlage zu einer Verzögerung des Fahrzeugs beitragen, während einer Bremsung (mehrfach ändern). Ein Sollwert für die Bremskraft wird von der Betätigungseinheit 1 vorgegeben und die Betätigungseinheit 1 vermittelt einem Fahrzeugführer das übliche Pedalgefühl beim Bremsen, und zwar auch dann, wenn das Fahrzeug nicht oder nur teilweise mit der Fahrzeug-Reibungsbremsanlage gebremst, sondern zumindest teilweise durch Generatorbetrieb des oder der Elektromotoren des Hybridfahrzeugs verzögert wird.

Betätigungseinheit 1 weist ein rohrförmiges Gehäuse 2 auf, in dem ein stangenförmiges Übertragungselement 3 verschiebbar geführt ist. Das Übertragungselement 3 steht an einem Ende aus dem Gehäuse 2 vor und ist gelenkig mit einem Fußbremspedal 4 verbunden, das als Bedienelement der Fahrzeugbremsanlage aufgefasst werden kann. Für eine Handbremse wäre ein Handbremshebel anstelle des Fußbremspedals 4 vorgesehen. Als Sollwertgeber für die Bremskraft oder Verzögerung des Fahrzeugs weist die Betätigungseinheit 1 einen Kraft- und/oder Wegsensor 5 auf, der eine Pedalkraft und/oder einen Pedalweg des Fußbremspedals 4 misst. Dabei muss wie bereits gesagt die Bremskraft nicht oder nicht vollständig von der Fahrzeug-Reibungsbremsanlage aufgebracht werden, sondern die Verzögerung kann auch durch Generatorbetrieb des oder der Elektromotoren des Fahrzeugs erfolgen.

An seinem im Gehäuse 2 befindlichen Ende ist das Übertragungselement 3 als Kolben 6 ausgebildet, der in einem Zylinder 7 abgedichtet und verschiebbar aufgenommen ist. Der Zylinder 7 ist als Sackloch in einem Schaft 8 eines Verstärkerkolbens 9 ausgebildet, wobei der Schaft 8 in Richtung des Übertragungselements 3 vom Verstärkerkolben 9 absteht und einen kleineren Durchmesser als der Verstärkerkolben 9 ausweist. Der Verstärkerkolben 9 ist abgedichtet in einem durchmessergrößeren Abschnitt 10 des rohrförmigen Gehäuses 2 der Betätigungseinheit 1 aufgenommen. Aufgrund des größeren Durchmessers des Verstärkerkolbens 9 gegenüber seinem Schaft 8 weist der Verstärkerkolben 9 eine kreisringförmige Kolbenfläche 11 auf der Seite des Schafts 9 auf, die hydraulisch mit Druck beaufschlagbar ist. Der durchmessergrößere Abschnitt 10 des Gehäuses 2 bildet einen Zylinder 12 für den Verstärkerkolben 9. Von einer dem Übertragungselement 3 abgewandten Seite steht eine Druckstange 13 vom Verstärkerkolben 9 ab, mit der ein nicht dargestellter Kolben des ebenfalls nicht dargestellten Hauptbremszylinders verschiebbar und auf diese Weise der Hauptbremszylinder und die an ihn angeschlossene Fahrzeug-Reibungsbremsanlage betätigbar ist. Es ist vorgesehen, das Gehäuse 2 der Betätigungseinheit 1 mit dem Durchmessergrößeren Abschnitt 10, der den Zylinder 12 für den Verstärkerkolben 9 bildet, an den nicht dargestellten Hauptbremszylinder anzuflanschen. Auch ist es möglich, dass der Verstärkerkolben 9 zugleich einen (Primär-)Kolben des Hauptsbremszylinders bildet. In diesem Fall ist das Gehäuse 2 einstückiger Bestandteil des nicht dargestellten Hauptbremszylinders (nicht dargestellt).

Das als Kolben 6 ausgebildete Ende des Übertragungselements 3, nachfolgend kurz als Kolben 6 des Übertragungselements 3 bezeichnet, und der Zylinder 7 des Schafts 8 des Verstärkerkolbens 9, bilden eine Kolben-Zylinder-Einheit 14, die auch als hydraulischer Übertrager aufgefasst werden kann. Ein Innenraum der Kolben-Zylinder-Einheit 14 kommuniziert durch eine Bohrung 15 im Zylinder 7 und einen den Zylinder 7 im Gehäuse 2 umschließenden Ringraum 16 mit einem Anschluss 32, der als Radialbohrung im Gehäuse 2 ausgeführt ist.

Das Übertragsungselement 3 weist einen Simulatorkolben 17 auf, der als Ringkolben ausgebildet ist und das Übertragungselement 3 konzentrisch umschließt. An einem dem Gehäuse 2 abgewandten Ende geht der Simulatorkolben 17 einstückig in das Übertragungselement 3 über. Der Simulatorkolben 17 taucht in einen im Querschnitt ringförmigen Zylinder 18, der einstückiger Bestandteil des Gehäuses 2 der Betätigungseinheit 1 ist und der das Gehäuse 2 konzentrisch umschließt. Im Zylinder 18 ist eine Rückstellfeder 19 angeordnet, die den Simulatorkolben 17 und mit ihm das Übertragungselement 3 in eine Grundstellung beaufschlagt.

Der Zylinder 18 des Simulatorkolbens 17 ist von einem ringförmigen Hydrospeicher 20 umschlossen, der den Zylinder 18 und das Gehäuse 2 der Betätigungseinheit 1 konzentrisch umschließt. Der Hydrospeicher 20 weist einen Ringkolben 21 auf, der von einer Schraubendruckfeder als Rückstellfeder 22 beaufschlagt ist. Der Hydrospeicher 20 kommuniziert mit dem Zylinder 18 des Simulatorkolbens 17. Der Hydrospeicher 20 und der Simulatorkolben 17 mit dem Zylinder 18 bilden einen noch zu erläuternden Pedalwegsimulator 23 der Betätigungseinheit 1.

Der Verstärkerkolben 9 weist ebenfalls eine Rückstellfeder 24 auf, die als Schraubendruckfeder ausgebildet und in dem durchmessergrößeren Abschnitt 10 des Gehäuses 2 untergebracht ist, der den Zylinder 12 des Verstärkerkolbens 9 bildet. Die Rückstellfeder 24 beaufschlagt den Verstärkerkolben 9 in seine Grundstellung, d.h. in Richtung des Übertragungselements 3.

Als Fremdenergieversorgungseinrichtung ist eine Hydropumpe 25 vorgesehen, die mit einem Elektromotor 26 antreibbar ist. Eine Druckseite der Hydropumpe 25 ist über ein Rückschlagventil 27 und ein Einlassventil 28 mit dem Zylinder 12 des Verstärkerkolbens 9 verbunden, so dass die achsscheibenförmige Kolbenfläche 11 des Verstärkerkolbens 9 hydraulisch mit Druck beaufschlagbar ist. Zur Zwischenspeicherung von Bremsflüssigkeit unter Druck ist ein Hydrospeicher 29 an der Druckseite der Hydropumpe 25 angeschlossen, außerdem ist ein Drucksensor 30 an die Druckseite der Hydropumpe 25 angeschlossen. Das Einlassventil 28 ist ein in seiner stromlosen Grundstellung geschlossenes 2/2-Wege-Magnetventil. An den Zylinder 12 des Verstärkerkolbens 9 ist ebenfalls ein Drucksensor 34 angeschlossen.

Eine Saugseite der Hydropumpe 25 ist über ein Auslassventil 31 mit dem Zylinder 12 des Verstärkerkolbens 9 verbunden. Auf der Saugseite der Hydropumpe 25 ist ein Rückschlagventil 41 und ein Bremsflüssigkeitsvorratsbehälter 33 vorgesehen. Das Auslassventil 31 ist ein in seiner stromlosen Grundstellung offenes 2/2-Wege-Magnetventil.

Wie bereits ausgeführt kommunizieren der Zylinder 18 des Simulatorkolbens 17 und der den Zylinder 18 umschließende Hydrospeicher 20. Durch ein Simulatorventil 35 sind der Hydrospeicher 20 und der Zylinder 18 mit der Kolben-Zylinder-Einheit 14 verbindbar, die den Übertrager bildet. Das Simulatorventil 35 ist ein in seiner stromlosen Grundstellung offenes 2/2-Wege-Magnetventil. Ein Rückschlagventil 36 verhindert ein Rückströmen von Bremsflüssigkeit von der Kolben-Zylinder-Einheit 14 zum Hydrospeicher 20 und dem Zylinder 18 des Simulatorkolbens 17.

Durch ein Übertragerventil 37 ist die Kolben-Zylinder-Einheit 14 mit dem Bremsflüssigkeitsvorratsbehälter 33 und der Saugseite der Hydropumpe 25 verbindbar. Das Übertragerventil 37 ist ein in seiner stromlosen Grundstellung geschlossenes 2/2-Wege-Magnetventil. Durch Verbinden mit dem Vorratsbehälter 33 wird die Kolben-Zylinder-Einheit 14 drucklos geschaltet, wodurch das Übertragungselement 3 frei gegenüber dem Schaft 8 des Verstärkerkolbens 9 verschiebbar ist. Durch ein Druckabsenkventil 38 sind der Zylinder 18 des Simulatorkolbens 17 und der Hydrospeicher 20 mit dem Vorratsbehälter 33 und der Saugseite der Hydropumpe 25 verbindbar. Das Druckabsenkventil 38 ist ein in seiner stromlosen Grundstellung offenes 2/2-Wege-Magnetventil. Dem Druckabsenkventil 38 und dem Vorratsbehälter 33 ist eine Drossel 39 zwischengeschaltet.

Durch ein Druckaufbauventil 40 sind der Hydrospeicher 20 und der Zylinder 18 des Simulatorkolbens 17 mit der Druckseite der Hydropumpe 25 und dem Hydrospeicher 29 verbindbar. Das Druckaufbauventil 40 ist ein in seiner stromlosen Grundstellung geschlossenes 2/2-Wege-Magnetventil.

Die Bezeichnung der Ventile 28, 31, 35, 37, 38, 40 als Einlassventil 28, Auslassventil 31, Simulatorventil 35, Übertragerventil 37, Druckabsenkventil 38 und Druckaufbauventil 40 erfolgt zu deren sprachlicher Unterscheidung.

Die Funktion der Betätigungseinheit 1 ist folgende: Zum Bremsen wird das Fußbremspedal 4 getreten und damit das Übertragungselement 3 in das Gehäuse 2 hineinverschoben. Die Kolben-Zylinder-Einheit 14, die den Übertrager bildet, ist durch Öffnen des Übertragerventils 37 drucklos, so dass der Verstärkerkolben 9 vom Übertragungselement 3 entkoppelt und das Übertragungselement 3 unabhängig vom Verstärkerkolben 9 verschiebbar ist. Eine Bremskraft wird in Abhängigkeit vom Signal des Kraft- oder Wegsensors 5 erzeugt. Es wird ein Bremsmoment eines oder mehrerer Elektro-Antriebsmotoren eines Hybridfahrzeugs erzeugt, die als Generator betrieben werden, sofern das mit der Bremsanlage ausgerüstete Kraftfahrzeug ein Hybridfahrzeug ist. Zusätzlich oder statt dessen wird durch Schließen des Auslassventils 31 und öffnen des Einlassventils 28 der Verstärkerkolben 9 hydraulisch mit Druck aus der Hydropumpe 25 und dem Hydrospeicher 29 beaufschlagt. Die Kraft des Verstärkerkolbens 9 wird über die Druckstange 13 auf einen Kolben des nicht dargestellten Hauptbremszylinders einer Fahrzeug-Reibungsbremsanlage übertragen, der dadurch betätigt wird. Der Anteil der Bremskraft, die mit den als Generator betriebenen Elektromotoren und mit dem Hauptbremszylinder, d.h. mit der hydraulischen Fahrzeug-Reibungsbremsanlage, erzeugt wird, lässt sich den Erfordernissen entsprechend einstellen. Die Steuerung oder Regelung erfolgt mittels eines nicht dargestellten, elektronischen Steuergeräts. Die Bremsung ist eine Fremdkraftbremsung. Zur Verbesserung einer Regelgüte können alle oder ein Teil der Magnetventile 28, 31, 35, 37, 38, 40 Proportionalventile sein. Eine Pedalkraft wird dadurch erzeugt, dass der Simulatorkolben 17 Bremsflüssigkeit aus dem Zylinder 18 in den Hydrospeicher 20 verdrängt. Der Simulatorkolben 17 arbeitet gegen seine Rückstellfeder 19 und der Ringkotben 21 des Hydrospeichers 20 arbeitet gegen seine Rückstellfeder 22. Weil der Simulatorkolben 17 mit dem Ringkolben 21 kommuniziert arbeitet der Simulatorkolben 17 über den Ringkolben 21 auch gegen dessen Rückstellfeder 22. Wie bereits gesagt, bilden der Simulatorkolben 17 im Zylinder 18 mit der Rückstellfeder 19 und der kommunizierende Hydrospeicher 20 mit der Rückstellfeder 22 einen Pedalwegsimulator 23.

Mit dem Druckaufbauventil 40 und dem Druckabsenkventil 38 lässt sich ein hydraulischer Druck im Zylinder 18 des Simulatorkolbens 17 und im Hydrospeicher 20 steuern oder regeln. Der hydraulische Druck im Zylinder 18 beaufschlagt den Simulatorkolben 17 und damit das Übertragungselement 3 und über dieses das Bremspedal 4. Durch Steuern oder Regeln des hydraulischen Drucks im Zylinder 18 lässt sich eine grundsätzlich beliebige Pedalkennlinie einstellen, also eine Abhängigkeit der Pedalkraft vom Pedalweg. Die Pedalkennlinie ist wiederum unabhängig von der Bremskraft, die als Fremdkraft erzeugt wird.

Auch ist eine Hilfskraftbremsung mit der Betätigungseinheit 1 möglich, indem mit dem Übertragerventil 37 Bremsflüssigkeit aus der Kolben-Zylinder-Einheit 14 gesteuert oder geregelt ausgelassen wird. Ein Nachfüllen von Bremsflüssigkeit kann mit der Hydropumpe 25 und aus dem Hydrospeicher 29 durch das Druckaufbauventil 40 und das Simulatorventil 35 erfolgen. Es lässt sich dadurch Muskelkraft vom Übertragungselement 3 über die Kolben-Zylinder-Einheit 14 auf den Schaft 8 des Verdrängerkolbens 9 einkoppeln, so dass die Betätigungskraft des Hauptbremszylinders teilweise durch Druckbeaufschlagung des Verstärkerkolbens 9 und zu einem anderen Teil durch Muskelkraft vom Übertragungselement 3 aufgebracht wird. Auch hier ist in beschriebener Weise die Pedalkennlinie am Bremspedal 4 steuer- oder regelbar.

Bei Ausfall oder Störung der Fremdenergieversorgung ist eine Hilfsbremsung ausschließlich per Muskelkraft des Fahrzeugführers ohne weiteres möglich. Es bleiben alle Magnetventile 28, 31, 35, 37, 38, 40 in ihren dargestellten Grundstellungen und die Fahrzeugbremsanlage wird durch Niedertreten des Fußbremspedals 4 betätigt. Das im Zylinder 7 der Kolben-Zylinder-Einheit 14 eingeschlossene Bremsflüssigkeitsvolumen bleibt wegen des geschlossenen Übertragerventils 37 konstant, so dass die Bewegung des Übertragungselements 3 verlustfrei auf den Verstärkerkolben 9 übertragen wird. Durch das offene Auslassventil 31 ist der Zylinder 12 des Verstärkerkolbens 9 mit dem Vorratsbehälter 33 verbunden, so dass Bremsflüssigkeit aus dem Vorratsbehälter 33 in den Zylinder 12 strömen kann, wenn der Verstärkerkolben 9 verschoben wird. Das Rückschlagventil 36 zwischen dem Simulatorventil 35 und der Kolben-Zylinder-Einheit 14 verhindert, dass Bremsflüssigkeit aus der den Übertrager bildenden Kolben-Zylinder-Einheit 14 austritt.

Im ungünstigsten Fall fällt die Fremdenergieversorgung während einer Fremdkraft- oder einer Hilfskraftbremsung aus. Bei der Bremsung ist Bremsflüssigkeit aus dem Zylinder 18 des Simulatorkolbens 17 in den Hydrospeicher 20 verdrängt worden. Diese Bremsflüssigkeit steht unter Druck und strömt durch Öffnen des Simulatorventils 35 in Richtung der Kolben-Zylinder-Einheit 14. Das Simulatorventil 35 öffnet bei Ausfall des Systems, weil es in seiner stromlosen Grundstellung offen ist. Beim Ausfall der Fremdenergieversorgung während einer Bremsung steht also unter Druck stehende Bremsflüssigkeit aus dem Hydrospeicher 20 zur Betätigung der Fahrzeugbremsanlage zur Verfügung. Die Drossel 39 zwischen dem Vorratsbehälter 33 und dem Druckabsenkventil 38 hat die Aufgabe, dass die Bremsflüssigkeit aus dem Hydrospeicher 20 zum größeren Teil zur Kolben-Zylinder-Einheit 14, die den Übertrager bildet, fließt und nicht in den Vorratsbehälter 33.

Es ist auch eine Bremsbetätigung ohne Bewegung des Übertragungselements 3, also ohne Pedalbetätigung möglich: Dazu wird die Kolben-Zylinder-Einheit 14 durch Öffnen des Übertragerventils 37 drucklos geschaltet und der Verstärkerkolben 9 nach Öffnen des Einlassventils 28 und Schließen des Auslassventils 31 von der Hydropumpe 25 bzw. aus dem Hydrospeicher 29 mit Druck beaufschlagt und auf diese Weise der nicht dargestellte Hauptbremszylinder betätigt. Die Bremsbetätigung ohne Pedalbetätigung ermöglicht beispielsweise eine Antriebsschlupf- oder Fahrdynamikregelung.

## Patentansprüche

1. Betätigungseinheit (1) für einen Hauptbremszylinder einer hydraulischen Fahrzeugbremsanlage, mit einem Übertragungselement (3) zur Übertragung von Muskelkraft eines Fahrzeugführers auf einen Kolben des Hauptbremszylinders, das mechanisch mit einem Betätigungselement (4) verbunden ist, und mit einem hydraulisch druckbeaufschlagbaren Verstärkerkolben (9), mit dem der Hauptbremszylinder betätigbar ist, **dadurch gekennzeichnet, dass** das Übertragungselement (3) und der Verstärkerkolben (9) eine Kolben-Zylinder-Einheit (14) als hydraulischen Übertrager aufweisen, mit dem eine Kraft vom Übertragungselement (3) auf den Verstärkerkolben (9) übertragbar ist, und dass die Kolben-Zylinder-Einheit (14), die den Übertrager bildet, drucklos schaltbar und **dadurch** der Verstärkerkolben (9) vom Übertragungselement (3) entkoppelbar ist.

2. Betätigungseinheit nach Anspruch 1, **dadurch gekennzeichnet, dass** die Kolben-Zylinder-Einheit (14) über ein Ventil (37) an einen Vorratsbehälter (33) angeschlossen ist.

3. Betätigungseinheit nach Anspruch 1, **dadurch gekennzeichnet, dass** das Übertragungselement (3) einen mechanisch mit ihm verbundenen Simulatorkolben (17) aufweist.

4. Betätigungseinheit nach Anspruch 3, **dadurch gekennzeichnet, dass** der Simulatorkolben (17) über ein Ventil (38) hydraulisch mit einem Vorratsbehälter (33) kommuniziert.

5. Betätigungseinheit nach Anspruch 3, **dadurch gekennzeichnet, dass** der Simulatorkolben (17) mit einem Hydrospeicher (20) kommuniziert.

6. Betätigungseinheit nach Anspruch 3, **dadurch gekennzeichnet, dass** der Simulatorkolben (17) ein Ringkolben ist, der das Übertragungselement (3) umschließt

7. Betätigungseinheit nach Anspruch 5, **dadurch gekennzeichnet, dass** der Hydrospeicher (20) ringförmig ist und das Übertragungselement (3) umschließt.

8. Betätigungseinheit nach Anspruch 1, **dadurch gekennzeichnet, dass** die Kolben-Zylinder-Einheit (14) hydraulisch mit dem Simulatorkolben (17) und/oder dem Hydrospeicher (20) verbindbar ist.

## Claims

1. Actuating unit (1) for a master brake cylinder of a hydraulic brake system, having a transmission element (3), which is mechanically connected to an actuating element (4), for transmitting muscle force of a vehicle driver to a piston of the master brake cylinder, and having a booster piston (9) which can be acted on with hydraulic pressure and by means of which the master brake cylinder can be actuated, **characterized in that** the transmission element (3) and the booster piston (9) have, as a hydraulic transmitter, a piston-cylinder unit (14) by means of which a force can be transmitted from the transmission element (3) to the booster piston (9), and **in that** the piston-cylinder unit (14) which forms the transmitter can be switched into a depressurized state and the booster piston (9) can thereby be decoupled from the transmission element (3).

2. Actuating unit according to Claim 1, **characterized in that** the piston-cylinder unit (14) is connected to a storage tank (33) via a valve (37).

3. Actuating unit according to Claim 1, **characterized in that** the transmission element (3) has a simulator piston (17) mechanically connected thereto.

4. Actuating unit according to Claim 3, **characterized in that** the simulator piston (17) communicates hydraulically with a storage tank (33) via a valve (38).

5. Actuating unit according to Claim 3, **characterized in that** the simulator piston (17) communicates with a hydraulic accumulator (20).

6. Actuating unit according to Claim 3, **characterized in that** the simulator piston (17) is an annular piston which surrounds the transmission element (3).

7. Actuating unit according to Claim 5, **characterized in that** the hydraulic accumulator (20) is of annular design and surrounds the transmission element (3).

8. Actuating unit according to Claim 1, **characterized in that** the piston-cylinder unit (14) can be hydraulically connected to the simulator piston (17) and/or to the hydraulic accumulator (20).

## Revendications

1. Unité d'actionnement (1) pour un cylindre de frein principal d'une installation de frein de véhicule hydraulique, comprenant un élément de transfert (3) pour le transfert de la force musculaire d'un conducteur du véhicule à un piston du cylindre de frein principal, qui est connecté mécaniquement à un élément d'actionnement (4), et comprenant un piston amplificateur (9) pouvant être sollicité par une pression hydraulique, avec lequel le cylindre de frein principal peut être actionné, **caractérisée en ce que** l'élément de transfert (3) et le piston amplificateur (9) présentent une unité cylindre-piston (14) en tant que système de transfert hydraulique, avec laquelle une force peut être transmise de l'élément de transfert (3) au piston amplificateur (9), et **en ce que** l'unité cylindre-piston (14), qui forme le système de transfert, peut être commutée sans pression et de ce fait le piston amplificateur (9) peut être désaccouplé de l'élément de transfert (3).

2. Unité d'actionnement selon la revendication 1, **caractérisée en ce que** l'unité cylindre-piston (14) est raccordée à un réservoir (33) par le biais d'une soupape (37).

3. Unité d'actionnement selon la revendication 1, **caractérisée en ce que** l'élément de transfert (3) présente un piston simulateur (17) connecté mécaniquement à celui-ci.

4. Unité d'actionnement selon la revendication 3, **caractérisée en ce que** le piston simulateur (17) communique hydrauliquement avec un réservoir (33) par le biais d'une soupape (38).

5. Unité d'actionnement selon la revendication 3, **caractérisée en ce que** le piston simulateur (17) communique avec un accumulateur hydraulique (20).

6. Unité d'actionnement selon la revendication 3, **caractérisée en ce que** le piston simulateur (17) est un piston annulaire qui entoure l'élément de transfert (3).

7. Unité d'actionnement selon la revendication 5, **caractérisée en ce que** l'accumulateur hydraulique (20) est annulaire et entoure l'élément de transfert (3).

8. Unité d'actionnement selon la revendication 1, **caractérisée en ce que** l'unité cylindre-piston (14) peut être connectée hydrauliquement au piston simulateur (17) et/ou à l'accumulateur hydraulique (20).
